## Europäisches Patentamt
## European Patent Office
## Office européen des brevets

(11) Numéro de publication: **0 050 550
B1**

(19)

# FASCICULE DE BREVET EUROPEEN

(12)

(45) Date de publication du fascicule du brevet:
10.04.85

(51) Int. Cl.⁴: **F 16 K 3/10**

(21) Numéro de dépôt: **81401560.8**

(22) Date de dépôt: **08.10.81**

(54) **Vanne à passage direct et à commande rotative.**

(30) Priorité: **17.10.80 FR 8022263**

(43) Date de publication de la demande:
**28.04.82 Bulletin 82/17**

(45) Mention de la délivrance du brevet:
**10.04.85 Bulletin 85/15**

(84) Etats contractants désignés:
**CH DE GB IT LI**

(56) Documents cités:
**DE - U - 1 903 817
FR - A - 1 262 734
US - A - 1 742 828**

(73) Titulaire: **COMMISSARIAT A L'ENERGIE ATOMIQUE
Etablissement de Caractère Scientifique Technique et
Industriel, 31/33, rue de la Fédération, F-75015 Paris (FR)**

(72) Inventeur: **Pruvot, Jean, 27, Avenue de Normandie,
F-93160 Noisy le Grand (FR)**
Inventeur: **Roquefort, André, 39, Avenue des Acacias,
F-92140 Clamart (FR)**

(74) Mandataire: **Mongrédien, André et al, c/o
BREVATOME 25, rue de Ponthieu, F-75008 Paris (FR)**

## Description

La présente invention concerne une vanne à passage direct et à commande rotative. Elle s'applique entre autres à la mise sous vide de canalisations et plus particulièrement à l'obturation de sas qui permettent la mise en place d'échantillons sous vide.

On connaît, par le document DE-U 1 903 817, une bride comprenant un boîtier prévu pour être serré contre une canalisation et un tiroir tournant dans le boîtier. La canalisation, le boîtier et le tiroir comportent des ouvertures. On peut manœuvrer le tiroir pour prélever ou non le fluide parcourant la canalisation. Une telle bride, munie d'un tiroir, est impropre à la mise sous vide de canalisations car son système d'étanchéité est trop sommaire. En outre, elle a un mode de fixation qui n'est pas adapté pour l'utiliser au fond d'un sas d'isolement en forme de puits.

On connaît également une vanne correspondant au préambule de la revendication 1 et décrite dans le document US-A 1 742 828. Cette vanne comprend un corps dans lequel deux disques percés sont aptes à tourner ensemble grâce à un dispositif d'entraînement. La rotation des disques vers la position fermée de la vanne provoque leur écartement axial, grâce à un coin qui est placé entre eux, sur lequel prennent appui des bossages dont sont munis les disques, et qui vient alors buter contre un arrêtoir solidaire du corps de la vanne.

Cette vanne connue présente les inconvénients suivants: il s'agit d'une vanne classique à tiroir dont l'encombrement latéral, constitué par la commande de la vanne, est important, ce qui et gênant pour certains usages. En outre, cette vanne connue ne permet pas de faire le vide dans une canalisation.

La présente invention a pour but de remédier aux inconvénients précédents.

Elle a pour objet une vanne à passage direct et à commande rotative comprenant un corps fermé par un couvercle, tous deux percés d'un orifice, deux plateaux obturateurs rotatifs coaxiaux percés d'un orifice et interposés entre le corps et le couvercle, un dispositif solidarisant les plateaux lorsque la vanne est en position ouverte, les quatre orifices étant alors alignés, un dispositif d'entraînement pour mettre les deux plateaux en rotation, et des moyens pour écarter axialement les deux plateaux à la fin de leur rotation vers la position fermée de la vanne, vanne caractérisée en ce que le dispositif solidarisant les deux plateaux est un dispositif d'encliquetage qui solidarise les plateaux sous l'action de moyens élastiques, en ce que les moyens pour écarter axialement les deux plateaux comportent un arrêtoir solidaire du couvercle, un ergot solidaire du premier plateau proche du fond du corps et traversant une lumière pratiquée dans le second plateau proche du couvercle, et en ce qu'un joint est prévu pour étancher l'orifice du corps, le dispositif d'entraînement mettant les plateaux en rotation de façon que, partant de la position ouverte de la vanne, l'ergot vienne en butée sur l'arrêtoir, le second plateau continuant alors seul à tourner d'une fraction de tour, ledit premier plateau s'en écartant ainsi par désencliquetage pour assurer la fermeture étanche de la vanne par l'intermédiaire du joint.

La vanne à commande rotative selon l'invention présente les avantages suivants par rapport à la vanne connue mentionnée plus haut: elle est adaptée à la mise sous vide de canalisations et sa constitution lui permet de ne pouvoir présenter aucun encombrement latéral, comme cela apparaît plus loin.

Selon une caractéristique particulière de l'invention, le dispositif d'encliquetage se compose de billes logées dans des empreintes et des chambrages pratiqués respectivement dans le premier et le second plateau, lesdits moyens élastiques étant un ressort. Lors du désencliquetage, les billes demeurent dans les chambrages pratiqués dans le second plateau mais sont délogées des empreintes, par exemple coniques, pratiquées dans le premier, l'écartant ainsi du second, ce qui provoque la fermeture de la vanne objet de l'invention. Lors de l'ouverture de celle-ci, (correspondant à une mise en rotation des plateaux en sens inverse), les billes regagnent les empreintes pratiquées dans le premier plateau. Si le second plateau comportait des empreintes au lieu de chambrages, les billes ne reviendraient pas obligatoirement dans ces empreintes lors de l'ouverture de la vanne objet de l'invention et risqueraient de traverser les divers orifices que celle-ci comporte.

Bien entendu, au lieu de billes, on pourrait placer des têtons dans lesdits chambrages, mais ces têtons s'useraient rapidement et exigeraient plus d'efforts que les billes de la part du dispositif d'entraînement.

Selon un mode de réalisation préféré de l'invention, le dispositif d'entraînement se compose d'un moteur entraînant un pignon entraînant lui-même ledit second plateau, ce dernier étant denté.

De préférence, le moteur est placé sur le couvercle. Ainsi, le dispositif d'entraînement (commandant l'ouverture et la fermeture de la vanne objet de l'invention) ne cause-t-il aucun encombrement latéral et occupe un volume minimum pour une taille donnée desdits orifices.

Selon une autre caractéristique particulière, des moyens d'équilibrage des efforts exercés sur ledit premier plateau par ledit joint étanchant l'orifice du corps de vanne, lorsque celle-ci est fermée, sont disposés au fond du corps de vanne. Ces moyens d'équilibrage peuvent, par exemple, consister en deux butées solidaires du fond du corps et disposées de façon à définir la base d'un triangle isocèle de «sommet» ledit joint étanchant l'orifice du corps de vanne, mais de préférence, ce joints et lesdits moyens d'équilibrage sont des joints toriques. Ainsi, le joint étanchant l'orifice du corps de vanne, lorsqu'il est usé, peut-il être remplacé par le second joint torique servant donc de réserve.

De plus, un dispositif de réglage peut être disposé sur le couvercle de vanne pour optimiser la compression desdits joints toriques. Il consiste par exemple en une cale d'épaisseur rigide ou en un système réglable à vis ayant même axe que les deux plateaux et permettant d'éviter d'avoir des tolérances trop serrées dans la fabrication de la vanne objet de l'invention, tout en exerçant une force d'application suffisante sur les plateaux.

D'autres caractéristiques et avantages de la vanne à passage direct et à commande rotative selon l'invention, apparaîtront mieux à la lecture de la description qui suit d'un mode de réalisation particulier donné à titre indicatif et non limitatif, en référence aux dessins annexés sur lesquels:

la figure 1 est une vue éclatée de la vanne objet de l'invention,

la figure 2a est une vue en coupe de cette vanne en position ouverte,

la figure 2b est une vue de dessus de la même vanne en position ouverte, son couvercle étant retiré,

la figure 3a est une vue en coupe de la même vanne en cours de fermeture, lorsque l'ergot vient juste de buter sur l'arrêtoir,

la figure 3b est une vue de dessus de la vanne sans couvercle et dans la même position qu'à la figure 3a,

la figure 4a est une vue en coupe de la vanne en position fermée,

la figure 4b est une vue de dessus de la vanne sans couvercle et en position fermée.

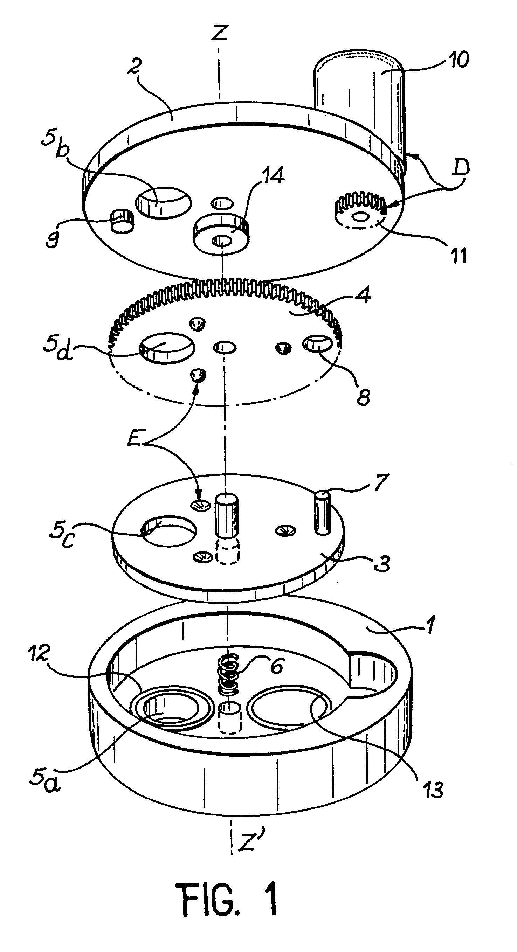

Sur la figure 1, on a représenté les constituants essentiels de la vanne objet de l'invention.

Celle-ci se compose du corps 1 et du couvercle 2. Le corps 1 est percé d'un orifice 5a et le couvercle 2 d'un orifice 5b. Entre le corps 1 et le couvercle 2 sont interposés deux plateaux de même axe Z'Z. Le premier 3 est proche du fond du corps 1 et percé d'un orifice 5c. Le second 4 est proche du couvercle 2 et percé d'un orifice 5d.

Le dispositif d'encliquetage E permet de solidariser les plateaux 3 et 4 sous l'action de moyens élastiques 6 consistant en un ressort s'appuyant sur le fond du corps 1. L'ergot 7 solidaire du premier plateau 3 et traversant une lumière 8 pratiquée dans le second plateau 4 peut venir en butée sur l'arrêtoir 9 solidaire du couvercle 2 lorsque les plateaux 3 et 4 sont mis en mouvement par le dispositif d'entraînement D comportant le moteur 10 placé sur le couvercle 2. Ce moteur 10 entraîne le pignon 11 entraînant lui-même le second plateau 4 qui est denté. Le moteur 10 peut aussi être placé sur le corps 1. Bien entendu, ce moteur 10 pourrait être placé à distance de la vanne selon l'invention, la liaison mécanique vanne-moteur étant assurée par un arbre de transmission.

Des moyens d'équilibrage 13 des efforts exercés par le joint torique 12 sur le premier plateau 3 lorsque la vanne objet de l'invention est fermée sont disposés au fond du corps 1 symétriquement au joint 12 par rapport à l'axe Z'Z et consistent en un second joint torique. Le joint torique 12 a pour fonction d'étancher l'orifice 5a du corps 1.

Pour optimiser la compression de ces deux joints toriques, un dispositif de réglage 14 est disposé sur le couvercle 2. Ce dispositif de réglage 14 doit être rigide et consiste, par exemple, en une cale d'épaisseur rigide ou en un système réglable à vis.

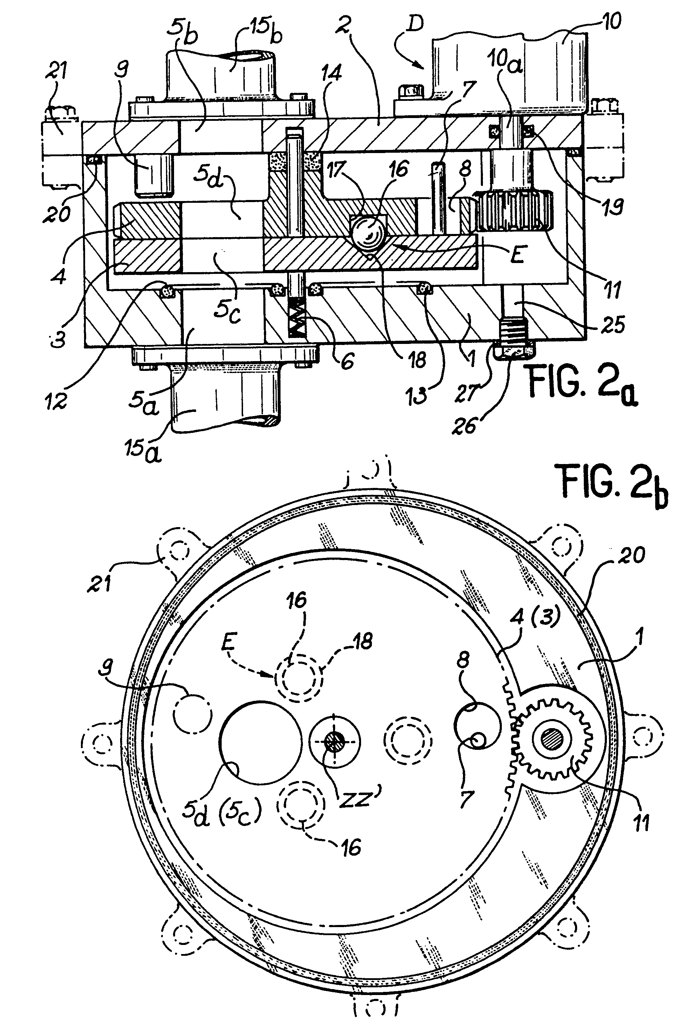

Les figures 2a et 2b montrent la vanne objet de l'invention en position ouverte: la première, selon une vue en coupe et la seconde, en vue de dessus, le couvercle 2 étant retiré.

En position ouverte, les quatre orifices 5a, 5b, 5c et 5d sont alignés. Lorsqu'on veut faire le vide dans une enceinte, la vanne objet de l'invention est, de préférence, montée de façon à ce que l'orifice 5a du corps 1 débouche sur la canalisation 15a conduisant à l'enceinte à vider et que l'orifice 5b du couvercle 2 débouche sur la canalisation 15b conduisant au dispositif de pompage non représenté et ne faisant pas partie de l'invention.

Les plateaux 3 et 4 sont solidarisés sous l'action du ressort 6 par le dispositif d'encliquetage E qui se compose de billes 16 logées dans les chambrages 17 du second plateau 4 et les empreintes 18 du premier plateau 3.

Le billes 16 sont au nombre de trois et sont disposées (de même que les chambrages 17 et les empreintes 18) de façon à occuper les sommets d'un triangle équilatéral dont le centre de gravité est sur l'axe Z'Z. La vanne selon l'invention pourrait, selon un mode de réalisation amélioré, comporter autant de billes 16 que de joints toriques 12 et 13. Par exemple, au lieu d'un joint torique 13, la vanne selon l'invention pourrait en comporter deux, disposés, ainsi que le joint torique 12, aux sommets d'un triangle équilatéral de centre de gravité situé sur l'axe Z'Z.

Un joint d'étanchéité 19 est placé sur l'axe 10a du moteur 10. De même, un joint 20 assure l'étanchéité de la liaison corps 1 – couvercle 2 réalisée par la bride de serrage 21. Un orifice 25 fermé par une vis 26 munie d'un joint 27 est pratiqué dans le corps 1, en face du moteur 10. Il peut être utilisé pour un prévidage.

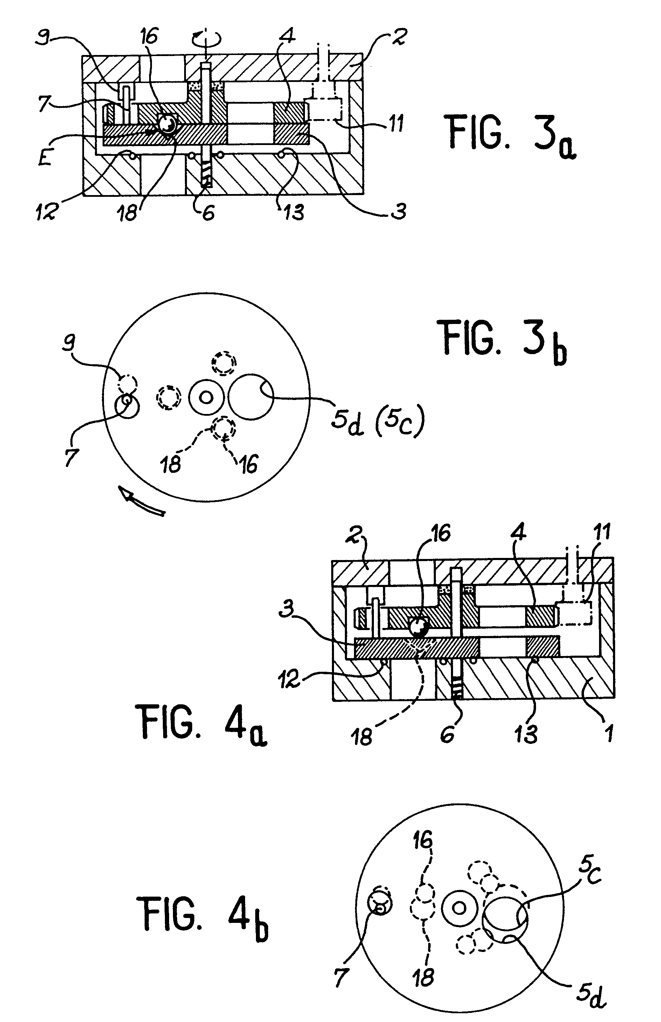

Le moteur 10 entraîne les plateaux 3 et 4 en rotation par l'intermédiaire du pignon 11. Comme indiqué sur les figures 3a et 3b montrant la vanne objet de l'invention en cours de fermeture, la première, selon une vue en coupe et la seconde, en vue de dessus, le couvercle 2 étant retiré, en fin de course l'ergot 7 du premier plateau 3 vient en butée sur l'arrêtoir 9 solidaire du couvercle 2.

Le second plateau 4 continue seul à tourner d'une fraction de tour, ce qui a pour effet de déloger les billes 16 des empreintes 18 du premier plateau 3, comme indiqué sur les figures 4a et 4b montrant la vanne objet de l'invention en position fermée, la première, selon une vue en coupe et la seconde, en vue de dessus, le couvercle 2 étant retiré. Sous l'action des billes 16, le premier plateau 3 s'écarte du second plateau 4 vers le fond du corps 1 et assure la compression des joints toriques 12 et 13.

Partant de la vanne objet de l'invention en position fermée (figures 4a et 4b), on peut l'amener en position ouverte sous l'action du pignon 11. Le second plateau 4 est entraîné d'une fraction de tour tandis que le premier plateau 3 est immobilisé par la force de frottement des joints toriques 12 et 13. Alors, le dispositif d'encliquetage E se verrouille (figures 3a et 3b), ce qui libère le premier plateau 3 permettant ainsi la décompression des joints toriques 12 et 13. Sous l'action du ressort 6, les plateaux 3 et 4 sont maintenus vers le couvercle 2 et dégagés du contact des joints toriques 12 et 13. Les plateaux 3 et 4 à nouveau solidarisés par le dispositif d'encliquetage E sont entraînés en rotation jusqu'à ce que tous les orifices 5a, 5b, 5c et 5d soient en regard les uns des autres (figures 2a et 2b).

La vanne à passage direct et à commande rotative objet de l'invention permet d'assurer les fonctions classiques d'étanchéité sous vide. Mais bien entendu, elle peut être utilisée avec tout fluide qu'il s'agisse d'un liquide ou d'un gaz.

Le dispositif d'entraînement commandant son ouverture et sa fermeture, avec un moteur placé sur le couvercle de vanne, occupe un volume minimum pour une dimension donnée des orifices de passage du fluide et ne provoque aucun encombrement latéral.

Ce type de vanne, miniaturisable et télécommandable, peut en particulier servir à l'obturation de sas permettant la mise en place d'échantillons sous vide.

**Revendications**

1. Vanne à passage direct et à commande rotative comprenant un corps (1) fermé par un couvercle (2), tous deux percés d'un orifice (5a, 5b), deux plateaux obturateurs rotatifs (3, 4) coaxiaux percés d'un orifice (5c, 5d) et interposés entre le corps (1) et le couvercle (2), un dispositif solidarisant les plateaux (3, 4) lorsque la vanne est en position ouverte, les quatre orifices (5a, 5b, 5c, 5d) étant alors alignés, un dispositif d'entraînement (D) pour mettre les deux plateaux (3, 4) en rotation, et des moyens (7, 8, 9) pour écarter axialement les deux plateaux à la fin de leur rotation vers la position fermée de la vanne, vanne caractérisée en ce que le dispositif solidarisant les deux plateaux (3, 4) est un dispositif d'encliquetage (E) qui solidarise les plateaux sous l'action de moyens élastiques (6), en ce que les moyens pour écarter axialement les deux plateaux comportent un arrêtoir (9) solidaire du couvercle (2), un ergot (7) solidaire du premier plateau (3) proche du fond du corps (1) et traversant une lumière (8) pratiquée dans le second plateau (4) proche du couvercle (2), et en ce qu'un joint (12) est prévu pour étancher l'orifice (5a) du corps (1), le dispositif d'entraînement (D) mettant les plateaux (3, 4) en rotation de façon que, partant de la position ouverte de la vanne, l'ergot (7) vienne en butée sur l'arrêtoir (9), le second plateau (4) continuant alors seul à tourner d'une fraction de tour, ledit premier plateau (3) s'en écartant ainsi par désencliquetage pour assurer la fermeture étanche de la vanne par l'intermédiaire du joint (12).

2. Vanne selon la revendication 1, caractérisée en ce que le dispositif d'encliquetage (E) se compose de billes (16) logées dans des empreintes (18) et des chambrages (17) pratiqués respectivement dans le premier (3) et le second plateau (4), lesdits moyens élastiques (6) étant un ressort.

3. Vanne selon l'une quelconque des revendications 1 et 2, caractérisée en ce que le dispositif d'entraînement (D) se compose d'un moteur (10) entraînant un pignon (11) entraînant lui-même ledit second plateau (4), ce dernier étant denté.

4. Vanne selon la revendication 3, caractérisée en ce que le moteur (10) est placé sur le couvercle (2).

5. Vanne selon l'une quelconque des revendications 1 à 4, caractérisée en ce que des moyens d'équilibrage (13) des efforts exercés sur ledit premier plateau (3) par ledit joint (12) lorsque la vanne est fermée, sont disposés au fond du corps (1).

6. Vanne selon la revendication 5, caractérisée en ce que le joint (12) et les moyens d'équilibrage (13) sont des joints toriques.

7. Vanne selon la revendication 6, caractérisée en ce qu'un dispositif de réglage (14) est disposé sur le couvercle (2) pour optimiser la compression desdits joints toriques.

8. Vanne selon la revendication 7, caractérisée en ce que le nombre des billes (16) et celui des joints toriques (12, 13) sont tous deux égaux à trois, ces biles (16) et ces joints toriques (12, 13) étant respectivement répartis sur les sommets de deux triangles équilatéraux.

**Patentansprüche**

1. Durchflussschieber mit drehbarem Antrieb, bestehend aus einem Gehäuse (1), das von einem Deckel (2) verschlossen ist, beide von einer Öffnung (5a, 5b) durchdrungen, zwei koaxialen drehbaren Schliessplatten (3, 4), die von einer Öffnung (5c, 5d) durchdrungen sind und zwischen dem Gehäuse (1) und dem Deckel (2) angeordnet sind, einer Einrichtung, die die Platten (3, 4) miteinander verbindet, wenn der Schieber sich in Öffnungsstellung befindet, wobei dann die vier Öffnungen (5a, 5b, 5c, 5d) in einer Linie liegen, einer Antriebseinrichtung (D), um die zwei Platten (3, 4) in Drehung zu versetzen, und Einrichtungen (7, 8, 9), um die zwei Platten am Ende ihrer Drehung in die verschlossene Stellung des Schiebers in axialer Richtung voneinander zu trennen, dadurch gekennzeichnet, dass die Einrichtung, die die zwei Platten (3, 4) miteinander verbindet, eine Rasteinrichtung (E) ist, die die Platten unter der Einwirkung einer elastischen Einrichtung (6) miteinander verbindet, und dass die Einrichtung zum Trennen der zwei Platten in axialer Richtung aus einem am Deckel (2) befestigten Anschlag (9), und einem an der ersten, dem Boden des Gehäuses (1) benachbarten Platte (3) befestigten Stift (7) besteht, der einen Druchbruch (8) in der zweiten, dem Deckel (2) benachbarten Platte (4) durchdringt, und dass eine Dichtung (12) vorgesehen ist, um die Öffnung (5a) des Gehäuses (1) abzudichten, dass die Antriebseinrichtung (D) die Platten (3, 4) so in Drehung versetzt, dass der Stift (7), ausgehend von der Öffnungsstellung des Schiebers, an dem Anschlag (9) zu liegen kommt, die zweite Platte (4) dann allein die Drehung um den Bruchteil einer Umdrehung fortsetzt, wobei die erste Platte (3) sich von der zweiten Platte (4) durch Ausrastung entfernt, um einen dichten Verschluss des Schiebers mit Hilfe der Dichtung (12) sicherzustellen.

2. Schieber nach Anspruch 1, dadurch gekennzeichnet, dass die Rasteinrichtung (E) sich aus Kugeln (16) zusammensetzt, die in Vertiefungen (18) in der ersten Platte (3) und in Sacklöchern (17) in der zweiten Platte (4) angeordnet sind, wobei die elastische Einrichtung (6) eine Feder ist.

3. Schieber nach einem der Ansprüche 1 und 2, dadurch gekennzeichnet, dass die Antriebseinrichtung (D) einen Motor (10) aufweist, der ein Zahnrad (11) antreibt, das seinerseits die zweite Platte (4), die gezahnt ist, antreibt.

4. Schieber nach Anspruch 3, dadurch gekennzeichnet, dass der Motor (10) auf dem Deckel (2) angeordnet ist.

5. Schieber nach einem der Ansprüche 1 bis 4, dadurch gekennzeichnet, dass eine Ausgleichseinrichtung (13) für die auf die erste Platte (3) von der Dichtung (12) im Schliesszustand des Schiebers ausgeübten Kräfte am Boden des Gehäuses (1) angeordnet ist.

6. Schieber nach Anspruch 5, dadurch gekennzeichnet, dass die Dichtung (12) und die Ausgleichseinrichtung (13) ringförmige Dichtungen sind.

7. Schieber nach Anspruch 6, dadurch gekennzeichnet, dass eine Nachstelleinrichtung (14) auf dem Deckel (2) angeordnet ist, um die Kompression der genannten ringförmigen Dichtungen zu optimieren.

8. Schieber nach Anspruch 7, dadurch gekennzeichnet, dass die Zahl der Kugeln (16) und die der ringförmigen Dichtungen (12, 13) beide jeweils drei ist, wobei die Kugeln (16) und die ringförmigen Dichtungen (12, 13) jeweils an den Spitzen von zwei gleichseitigen Dreiecken angeordnet sind.

**Claims**

1. Through-flow rotatable gate valve comprising a body (1) closed by a lid (2) both being pierced by an orifice (5a, 5b), two coaxial rotatable closing plates (3, 4) pierced by an orifice (5c, 5d) and interposed between the body (1) and the lid (2), a device locking the plates (3, 4) in position when the valve is open, the four orifices (5a, 5b, 5c, 5d) thereby being aligned, an actuating device (D) for rotating the two plates (3, 4) and means (7, 8, 9) for axially separating the two plates at the end of their rotation towards the closed position of the valve, the valve being characterized in that the device locking the two plates (3, 4) in position is a ratchet means (E) which locks the plates together under the influence of elastic means (6), and in that the means for axially separating the two plates comprises a retainer (9) fixed to the lid (2), a pin (7) fixed to the first plate (3) nearer the bottom of the body (1) and passing through a bore (8) formed in the second plate (4) nearer the lid (2), and in that a gasket (12) is provided for sealing the orifice (5a) of the body (1), the actuating means (D) rotating the plates (3, 4) so that, moving from the open position of the valve, the pin (7) comes into abutment on the retainer (9), the second plate (4) thereby continuing to turn by itself for a fraction of a rotation, said first plate (3) being thereby separated by the ratchet to ensure a fluid-tight closing of the valve by means of the gasket (12).

2. Valve according to Claim 1, characterized in that the ratchet means (E) comprises balls (16) located in bores (18) and counter-bores (17) respectively formed in the first plate (3) and the second plate (4), the elastic means (6) being a spring.

3. Valve according to either of Claims 1 and 2, characterized in that the actuating means (D) comprises a motor (10) actuating a pinion (11) which itself actuates said second plate (4) which latter has teeth.

4. Valve according to Claim 3, characterized in that the motor (10) is located on the lid (2).

5. Valve according to any one of Claims 1 to 4, characterized in that equilibrating means (13) for the force exerted on said first plate (3) by said gasket (12) when the valve is closed, are located at the bottom of the body (1).

6. Valve according to Claim 5, characterized in that the gasket (12) and the equilibrating means (13) are O-rings.

7. Valve according to Claim 6, characterized in that a control means (14) is located on the lid (2) to optimize compression of said O-rings.

8. Valve according to Claim 7, characterized in that the number of balls (16) and that of the O-rings (12, 13) are both equal to 3, said balls (16) and said O-rings (12, 13) being respectively located at the apices of two equilateral triangles.

FIG. 1

0 050 550

FIG. 2a

FIG. 2b

FIG. 3a

FIG. 3b

5d (5c)

FIG. 4a

FIG. 4b

5c

5d